(19) Europäisches Patentamt / European Patent Office / Office européen des brevets

(11) **EP 3 690 994 A1**

(12) **EUROPEAN PATENT APPLICATION**
published in accordance with Art. 153(4) EPC

(43) Date of publication:
**05.08.2020 Bulletin 2020/32**

(21) Application number: **18861416.8**

(22) Date of filing: **28.09.2018**

(51) Int Cl.:
*H01M 4/139* (2010.01)    *H01M 4/13* (2010.01)
*H01M 4/62* (2006.01)    *H01M 10/0566* (2010.01)

(86) International application number:
**PCT/JP2018/036167**

(87) International publication number:
**WO 2019/065930 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017 JP 2017187329**

(71) Applicant: **Dai-Ichi Kogyo Seiyaku Co., Ltd.**
**Kyoto-shi, Kyoto 600-8873 (JP)**

(72) Inventors:
• **SANUKI Atsushi**
  kyoto-shi
  **Kyoto 600-8873 (JP)**
• **KAWANO Yuka**
  kyoto-shi
  **Kyoto 600-8873 (JP)**
• **NAKAMURA Shiho**
  kyoto-shi
  **Kyoto 600-8873 (JP)**

(74) Representative: **TBK**
**Bavariaring 4-6**
**80336 München (DE)**

(54) **NEGATIVE ELECTRODE ACTIVE MATERIAL PAINT, NEGATIVE ELECTRODE AND SECONDARY BATTERY**

(57) A negative electrode active material coating material capable of providing a secondary battery that is of low cost, has high capacity, and has excellent battery characteristics, a negative electrode, and a secondary battery are provided.

The negative electrode active material coating material contains a negative electrode active material, a conductive agent, an aqueous binder, water, and a solvent, wherein the boiling point of the solvent is 200°C or more and 300°C or less, the water solubility of the solvent is 20 g/L or more, and the content of the solvent is 0.1% by mass or more and 10% by mass or less with respect to 100% by mass of the negative electrode active material coating material.

EP 3 690 994 A1

**Description**

Technical Field

The present invention relates to a negative electrode active material coating material, a negative electrode, and a secondary battery.

Background Art

In recent years, as a secondary battery, a lithium ion secondary battery capable of achieving high energy density and high power density has attracted attention. Furthermore, for a battery to achieve high capacity, the thickening of an electrode mixture layer has been studied (PTL 1).

Citation List

Patent Literature

PTL 1: Japanese Unexamined Patent Application Publication No. 2016-189352

Summary of Invention

Technical Problem

However, due to the demand for low costs, a tendency exists to increase the rate at which drying is performed after applying an active material coating material. Thus, when the coating thickness of the active material coating material of the electrode is increased with the thickening of the mixture layer, problems such as insufficient drying and the occurrence of cracking in the mixture layer after drying arise. To solve these problems, an improvement through increasing the mixing amount of an aqueous binder (carboxymethyl cellulose sodium salt, styrene-butadiene rubber) has been studied. However, a problem in this case is that when the amount of aqueous binder which is an insulator increases, the resistance in the electrode increases, resulting in deteriorated battery characteristics. Accordingly, an object of the present invention is to provide a negative electrode active material coating material capable of providing a secondary battery that is of low cost, has high capacity, and has excellent battery characteristics, a negative electrode, and a secondary battery.

Solution to Problem

In a first embodiment of the present invention, a negative electrode active material coating material contains a negative electrode active material, a conductive agent, an aqueous binder, water, and a solvent, where a boiling point of the solvent is 200°C or more and 300°C or less, water solubility of the solvent at 25°C is 20 g/L or more, and a content of the solvent is 0.05% by mass or more and 5% by mass or less with respect to 100% by mass of the negative electrode active material coating material.
In a preferred embodiment, the total content of the aqueous binder is 0.05% by mass or more and 5% by mass or less with respect to 100% by mass of the negative electrode active material coating material.
In another embodiment of the present invention, a negative electrode includes a current collector and a negative electrode active material mixture layer formed on the current collector, where the negative electrode active material mixture layer is formed by drying the negative electrode active material coating material and has a coating weight per unit area of 10 mg/cm$^2$ or more and 30 mg/cm$^2$ or less.
In still another embodiment of the present invention, a secondary battery includes a negative electrode, a positive electrode, a separator disposed between the negative electrode and the positive electrode, and an electrolyte solution, where the negative electrode is the above-described negative electrode.

Advantageous Effects of Invention

The present invention can provide a negative electrode active material coating material capable of providing a secondary battery that is of low cost, has high capacity, and has excellent battery characteristics, a negative electrode, and a secondary battery.

Description of Embodiments

Next, embodiments of the present invention will be described in detail.

A negative electrode active material coating material according to the present embodiment (hereafter at times simply referred to as a coating material) is a negative active material coating material containing a negative electrode active material, a conductive agent, an aqueous binder, water, and a solvent, where the boiling point of the solvent is 200°C or more and 300°C or less, the water solubility of the solvent at 25°C is 20 g/L (25°C) or more, and the content of the solvent is 0.05% by mass or more and 5% by mass or less with respect to 100% by mass of the negative electrode active material coating material.

The negative electrode active material for use may be one or two or more selected from a carbon-based negative electrode active material and a silicon-based negative electrode active material.

The carbon-based negative electrode active material for use is not particularly limited as long as it is a material that contains carbon (atoms) and that is capable of electrochemically occluding and releasing lithium ions. The carbon-based active material may be, for example, a graphite active material (e.g., artificial graphite, natural graphite, a mixture of artificial graphite and natural graphite, and natural graphite covered with artificial graphite), and two or more of the foregoing in combination may also be used.

The silicon-based negative electrode active material is a material that contains silicon (atoms) and that is capable of electrochemically occluding and releasing lithium ions. The silicon-based negative electrode active material is, for example, fine particles of silicon or a silicon compound. The silicon compound is not particularly limited as long as it is a silicon compound used as a negative electrode active material for a lithium-ion secondary battery, but specifically, may be a silicon oxide, a silicon alloy, or the like. Among these, one or two or more selected from silicon, a silicon alloy, and a silicon oxide represented by $SiO_x$ (wherein x is $0.5 \leq x \leq 1.6$) are preferable.

As the conductive agent, any electronically conductive material may be used as long as it has no adverse effects on battery performance. Typically used is carbon black such as acetylene black or Ketjen black, but a conductive material such as natural graphite (e.g., vein graphite, flake graphite, and amorphous graphite), artificial graphite, carbon whisker, carbon fiber, metal (e.g., copper, nickel, aluminum, silver, and gold) powder, metal fiber, or a conductive ceramic material is also acceptable. These conductive agents may be exemplified by graphite, acetylene black, carbon black, Ketjen black, carbon nanotubes, derivatives of the foregoing, and carbon fiber. These can also be used as a mixture of two or more kinds. The content of the conductive agent is preferably 0.1% by mass or more and 30% by mass or less, particularly preferably 0.2% by mass or more and 20% by mass or less with respect to 100% by mass of the negative electrode active material.

The aqueous binder may be styrene-butadiene rubber, acrylated styrene-butadiene rubber, polyvinyl alcohol, sodium polyacrylate, a copolymer of propylene and an olefin having 2 to 8 carbon atoms, a copolymer of (meth)acrylic acid and (meth)acrylic acid alkyl ester, or a combination of the foregoing.

When the aqueous binder is used, a cellulose-based compound capable of imparting viscosity may be further contained. As the cellulose-based compound, one or more of carboxymethyl cellulose, hydroxypropyl methylcellulose, methylcellulose, alkali metal salts of the foregoing, and the like may be used in a mixture. As the alkali metal salts, salts containing Na, K, or Li may be used.

The lower limit of the total content of the aqueous binder (the total content of the aqueous binder and the cellulose-based compound) is preferably 0.05% by mass or more, more preferably 0.25% by mass or more, and even more preferably 0.5% by mass or more with respect to 100% by mass of the negative electrode active material coating material. On the other hand, the upper limit is preferably 5.0% by mass or less, more preferably 2.5% by mass or less, and even more preferably 1.0% by mass or less. When the total content of the aqueous binder is in this range, the negative electrode active material and the conductive agent have favorable dispersibility; thus, a uniform and homogeneous negative electrode active material layer is obtainable.

Regarding the mixing ratio of the cellulose-based compound to the aqueous binder, the content of the cellulose-based compound is preferably 5 parts by mass or more, more preferably 10 parts by mass or more, and even more preferably 20 parts by mass or more with respect to 100 parts by mass of aqueous binder. Furthermore, the content of the cellulose-based compound is preferably 300 parts by mass or less, more preferably 200 parts by mass or less, and even more preferably 100 parts by mass or less. When the mixing ratio is in this range, the negative electrode active material and the conductive agent have favorable dispersibility; thus, a uniform and homogeneous negative electrode active material layer is obtainable.

The boiling point of the solvent is 200°C or more and 300°C or less, and the water solubility of the solvent is 20 g/L (25°C) or more. When the solvent fulfills the conditions, even in the case where the coating thickness is increased, cracking does not occur; thus, a uniform and homogeneous negative electrode active material layer is obtainable.

The solvent is not particularly limited as long as it fulfills the above-described conditions, and specific examples of the solvent include N-methyl-2-pyrrolidone, N-methylacetamide, acetamide, 2-phenylethanol, 2-phenoxyethanol, 2-(2-phenoxyethoxy)ethanol, 1,3-propanediol, 1,4-butanediol, 2,3-butanediol, 1,5-pentanediol, 2,2'-dihydroxydiethyl ether, 2-(2-ethoxyethoxy)ethanol, dipropylene glycol, 1,2-dibutoxyethane, γ-butyrolactone, ethylene carbonate, and propylene carbonate.

The content of the solvent is 0.05% by mass or more and 5% by mass or less with respect to 100% by mass of the negative electrode active material coating material. When the content is in this range, the negative electrode active material coating material has favorable dispersibility; thus, a favorable negative electrode active material layer is obtained. The lower limit of the content is preferably 0.25% by mass or more, more preferably 0.5% by mass or more. The upper limit of the content is preferably 2.5% by mass or less, more preferably 1.5% by mass or less. When the content is in this range, even in the case where the coating thickness is increased, cracking does not occur; thus, a uniform and homogeneous negative electrode active material layer is obtainable.

The negative electrode active material coating material can be prepared by successively adding the negative electrode active material and the conductive agent to the aqueous binder, mixing these, and diluting the mixture with water. The viscosity of the negative electrode active material coating material can be appropriately set, but specifically, the lower limit is 1,000 mPa·s or more, preferably 2,000 mPa·s or more, and more preferably 3,000 mPa·s or more. On the other hand, the upper limit is preferably 10,000 mPa·s or less, more preferably 7,000 mPa·s or less, and even more preferably 5,000 mPa·s or less. When the negative electrode active material coating material has a viscosity in this range, the coating material has excellent coating properties and is thus favorable.

In the above-described negative electrode, a negative electrode active material layer is formed by applying the above-described negative electrode active material coating material to a current collector and volatilizing water.

As the current collector, any electronic conductor may be used as long as it has no adverse effects on a battery formed. For example, in addition to copper, stainless steel, nickel, aluminum, titanium, baked carbon, conductive polymers, conductive glass, Al-Cd alloys, or the like, copper or the like with the surface thereof being processed with carbon, nickel, titanium, or silver is also usable to improve adhesion, conductivity, and oxidation resistance. The surface of such a current collector material may be oxidized. Furthermore, the form of the current collector is not limited to a foil form, and a molded body in the form of a film, a sheet, a mesh, a punched or expanded piece, a lath, porous medium, foam, or the like may also be used. The thickness is not particularly limited, but a current collector having a thickness of a 1 $\mu$m to 100 $\mu$m is typically used.

The coating thickness of the negative electrode active material coating material when applied to the current collector is appropriately set, but specifically, the current collector is suitable for being coated with a relatively large thickness of 150 $\mu$m or more and 300 $\mu$m or less.

The coating weight per unit area of the negative electrode active material layer is appropriately set, but specifically is 10 mg/cm$^2$ or more, and the negative electrode active material layer is suitable for being coated with a relatively large coating weight per unit area of 30 mg/cm$^2$ or less.

A secondary battery according to the present invention includes the above-described negative electrode as a negative electrode. The structure of the secondary battery according to one embodiment is not particularly limited, and the battery may be constituted by, for example, a positive electrode, a negative electrode, a separator, and an electrolyte, where the above-described electrode according to the present embodiment is used as the negative electrode. In one embodiment, the battery may be formed by including a multilayer body where a positive electrode and a negative electrode are alternately stacked with a separator interposed therebetween, a housing for containing the multilayer body, and an electrolyte, such as an electrolyte solution, that is injected into the housing.

EXAMPLES

Next, Examples and Comparative Examples will be described together. However, these Examples are not intended to limit the present invention. In the Examples, "%" refers to % by mass unless otherwise specified.

[Preparation of Coating Materials]

(Coating Material 1)

With a planetary centrifugal mixer, 96.5 parts by mass of a negative electrode active material (natural graphite-based active material), 0.5 parts by mass of a conductive material (conductive carbon black, product name: Super P, manufactured by Imerys GC Japan, K.K.), 2 parts by mass of an aqueous binder (styrene-butadiene rubber emulsion, solid content 49%), 1 part by mass of a cellulose-based compound 1 (carboxymethyl cellulose sodium salt, Celogen F-6HS9 manufactured by DKS Co., Ltd.), and 0.2 parts by mass of a solvent 1 (N-methylpyrrolidone, boiling point 202°C, water solubility 1000 g/L) were stirred at a rotational speed of 20 rpm for 10 minutes. Subsequently, 100 parts by mass of distilled water was added thereto in a few increments while, in each addition, stirring the mixture at a rotational speed of 40 rpm for 10 minutes to obtain a coating material 1.

(Coating Materials 2 and 3)

The preparation was performed in the same manner as in the case of the coating material 1 to obtain coating materials 2 and 3, other than the mixing amount of the solvent 1 (N-methylpyrrolidone) being changed as presented in Table 1.

(Coating Material 4)

The preparation was performed in the same manner as in the case of the coating material 1 to obtain a coating material 4, other than the solvent 1 (N-methylpyrrolidone) being replaced with a solvent 2 (2-phenoxyethanol, boiling point 245°C, water solubility 28.9 g/L) and the mixing amount being changed to 0.3 parts by mass.

(Coating Materials 5 and 6)

The preparation was performed in the same manner as in the case of the coating material 4 to obtain coating materials 5 and 6, other than the mixing amount of 2-phenoxyethanol being changed as presented in Table 1.

(Coating Material 7)

The preparation was performed in the same manner as in the case of the coating material 1 to obtain a coating material 7, other than the solvent (N-methylpyrrolidone) being replaced with 2-(2-phenoxyethoxy)ethanol (boiling point 298°C, 37 g/L).

(Coating Material 8)

The preparation was performed in the same manner as in the case of the coating material 7 to obtain a coating material 8, other than the mixing amount of 2-(2-phenoxyethoxy)ethanol being changed to 1 part by mass.

(Coating Material 9)

The preparation was performed in the same manner as in the case of the coating material 1 to obtain a coating material 9, other than the cellulose-based compound 1 being replaced with a cellulose-based compound 2 (carboxymethyl cellulose sodium salt, Celogen BSH-12, manufactured by DKS Co., Ltd.), the mixing amount of the foregoing being changed to 0.6 parts by mass, and the mixing amount of the solvent 1 being changed to 1.3 parts by mass.

(Coating Material 10)

The preparation was performed in the same manner as in the case of the coating material 1 to obtain a coating material 10, other than the mixing amount of the solvent 1 being changed to 2.5 parts by mass.

(Coating Material 11)

The preparation was performed in the same manner as in the case of the coating material 9 to obtain a coating material 11, other than the solvent 1 being replaced with the solvent 2 (2-phenoxyethanol) and the mixing amount of the foregoing being changed to 1.3 parts by mass.

(Coating Material 12)

The preparation was performed in the same manner as in the case of the coating material 1 to obtain a coating material 9, other than no solvent being mixed.

[Evaluation of Coating Materials]

The coating materials 1 to 12 were evaluated by using the following evaluation criteria. Table 1 below presents the results.

(Viscosity)

The viscosity of the negative electrode active material coating material at 25°C was measured with a BM viscometer (single cylindrical rotational viscometer) in accordance with JIS Z8803. In so doing, (a) the measurement was made with the rotor rotational speed set to 60 rpm; (b) when the measured value in (a) was 8000 mPa·s or more, the measurement was made with the rotor rotational speed changed to 30 rpm; and (c) when the measured value in (b) was 16000 mPa·s or more, the measurement was made with the rotor rotational speed changed to 12 rpm.

(Dispersion State)

The dispersion state of the negative electrode active material and the conductive material contained in the negative electrode active material coating materials was evaluated by using the following evaluation criteria.
Good: The absence of small solids of the negative electrode active material or small solids of the conductive material resulting from insufficient dispersion is visually confirmed, and the absence of the aqueous binder in isolation or aggregates of the aqueous binder resulting from insufficient dispersion is visually confirmed.
Fair: The presence of small solids of the negative electrode active material or small solids of the conductive material resulting from insufficient dispersion is visually confirmed, or the presence of a tiny portion of the aqueous binder in isolation or small aggregates of the aqueous binder resulting from insufficient dispersion is visually confirmed.
Poor: The presence of large solids of the negative electrode active material or large solids of the conductive material obviously resulting from insufficient dispersion is visually confirmed, or the presence of the aqueous binder obviously in isolation, large aggregates of the aqueous binder, coating material separation, or the like is visually confirmed.

[Table 1]

| | Coating material 1 | Coating material 2 | Coating material 3 | Coating material 4 | Coating material 5 | Coating material 6 | Coating material 7 | Coating material 8 | Coating material 9 | Coating material 10 | Coating material 11 | Coating material 12 | Coating material 13 |
|---|---|---|---|---|---|---|---|---|---|---|---|---|---|
| Negative electrode active material (parts by mass) | 96.5 | 96.5 | 96.5 | 96.5 | 96.5 | 96.5 | 96.5 | 96.5 | 96.9 | 96.9 | 96.9 | 96.5 | 96.9 |
| Conductive material (parts by mass) | 0.5 | 0.5 | 0.5 | 0.5 | 0.5 | 0.5 | 0.5 | 0.5 | 0.5 | 0.5 | 0.5 | 0.5 | 0.5 |
| Water-soluble binder (parts by mass) | 2 | 2 | 2 | 2 | 2 | 2 | 2 | 2 | 2 | 2 | 2 | 2 | 2 |
| Cellulose-based compound 1 (parts by mass) | 1 | 1 | 1 | 1 | 1 | 1 | 1 | 1 | | | | 1 | |
| Cellulose-based compound 2 (parts by mass) | | | | | | | | | 0.6 | 0.6 | 0.6 | | 0.6 |
| Solvent 1 (parts by mass) | 0.2 | 1 | 3 | | | | | | 1.3 | 2.5 | | | |
| Solvent 2 (parts by mass) | | | | 0.3 | 0.5 | 1 | | | | | 1.3 | | 1.3 |
| Solvent 3 (parts by mass) | | | | | | | 0.2 | 1 | | | | | |

EP 3 690 994 A1

| | Coating material 1 | Coating material 2 | Coating material 3 | Coating material 4 | Coating material 5 | Coating material 6 | Coating material 7 | Coating material 8 | Coating material 9 | Coating material 10 | Coating material 11 | Coating material 12 | Coating material 13 |
|---|---|---|---|---|---|---|---|---|---|---|---|---|---|
| Water (parts by mass) | 100 | 100 | 100 | 100 | 100 | 100 | 100 | 100 | 100 | 100 | 100 | 100 | 100 |
| Viscosity of coating material (mPa·s) | 3630 | 3740 | 4050 | 3140 | 3330 | 4340 | 3630 | 3630 | 3510 | 4080 | 6670 | 3630 | 2350 |
| Dispersion state | Good | Good | Good | Good | Good | Good | Good | Good | Good | Good | Good | Good | Good |

EP 3 690 994 A1

[Production of Negative Electrodes]

(Negative Electrode 1)

The coating material 1 was applied with a thickness of 280 $\mu$m to a copper foil (thickness 10 $\mu$m) by adjusting an applicator. After pre-drying was performed at 100°C, vacuum drying was performed at 130°C for 8 hours. The electrode obtained after drying was press-molded with a roller press machine to obtain an electrode sheet including a negative electrode mixture layer with the electrode density of one side of the copper foil being 1.5 g/cm$^3$. Subsequently, the electrode sheet was punched into a circle with a $\phi$12 mm punching machine to obtain a negative electrode 1 for evaluation.

(Negative Electrodes 2 to 14)

Production was performed in the same manner as in the case of the negative electrode 1 to obtain negative electrodes 2 to 14, other than the coating material and the coating thickness being changed as presented in Table 2.

[Evaluation of Negative Electrodes]

The negative electrodes 1 to 14 were evaluated by using the following evaluation criteria. Table 2 below presents the results.

(Measurement of Coating Weight)

The weight of a mixture layer was calculated by subtracting the weight of the copper foil (copper foil) from the weight of the electrode (electrode weight) punched in $\phi$12 mm. The weight of the active material was calculated from the ratio of the active material in the mixture layer (active material content) and was divided by the area of the punched electrode. The resulting value was determined to be a coating weight.

$$\text{Coating weight } (g/cm^2) = (\text{electrode weight } (g) - \text{copper}$$

$$\text{foil weight } (g)) \times \text{active material content } (mass\%)/\text{area of}$$

$$\text{electrode } (cm^2) \cdots (\text{Formula 1})$$

(Evaluation of Dry Cracking)

The state of the negative electrodes after drying was evaluated by using the following evaluation criteria.
Excellent: Visual observation of the surface of the electrode after pre-drying confirms the total absence of cracks, powder fall-off, and the like.
Good: Visual observation of the surface of the electrode after pre-drying confirms the presence of tiny cracks on an end of the coated surface and the total absence of cracking, powder fall-off, or the like in the middle of the surface.
Fair: Visual observation of the surface of the electrode after pre-drying confirms the presence of cracks and the total absence of powder fall-off.

(Measurement of Peel Strength)

The electrode sheet was cut into a strip having a size of 18 cm $\times$ 2 cm, and a steel plate having a thickness of 1 mm was made to adhere to the current collector-side of the sheet with a double-sided tape, the coating surface was made to stick to the double-sided tape, and a cellophane adhesive tape was made to stick to the current collector. Stress applied during peeling at a speed of 50 mm/min in the direction of 180° was measured with a tensile tester (Autograph AGS-X, manufactured by Shimadzu Corporation).

[Table 2]

| | Negative electrode active material coating material | Coating thickness (μm) | Coating weight (mg/cm²) | Dry cracking | Peel strength (N/cm) |
|---|---|---|---|---|---|
| Negative electrode 1 | Coating material 1 | 280 | 17.4 | Good | 0.153 |
| Negative Electrode 2 | Coating material 2 | 280 | 17.2 | Good | 0.151 |
| Negative Electrode 3 | Coating material 3 | 280 | 17.5 | Excellent | 0.159 |
| Negative Electrode 4 | Coating material 4 | 300 | 23.7 | Good | 0.056 |
| Negative Electrode 5 | Coating material 5 | 300 | 24.8 | Good | 0.052 |
| Negative Electrode 6 | Coating material 6 | 300 | 20 | Excellent | 0.046 |
| Negative Electrode 7 | Coating material 7 | 280 | 16.88 | Good | 0.21 |
| Negative Electrode 8 | Coating material 8 | 280 | 16.88 | Excellent | 0.136 |
| Negative Electrode 9 | Coating material 9 | 300 | 22.9 | Excellent | 0.33 |
| Negative Electrode 10 | Coating material 10 | 300 | 22.5 | Excellent | 0.34 |
| Negative Electrode 11 | Coating material 11 | 300 | 24.5 | Excellent | 0.21 |
| Negative Electrode 12 | Coating material 12 | 140 | 8.6 | Excellent | 0.253 |
| Negative Electrode 13 | Coating material 12 | 280 | 16.88 | Fair | - |
| Negative Electrode 14 | Coating material 13 | 300 | 14 | Fair | - |

Table 2 suggests that in the case of the negative electrodes using the coating materials that do not contain a solvent (the coating materials 12 and 13), cracking occurred in negative electrode mixture layers during drying when the coating amount was increased (the negative electrodes 13 and 14) .

[Production of Lithium Ion Secondary Battery]

(Example 1)

The negative electrode 1 obtained as described above, a separator (Celgard 2325, manufactured by Thank-Metal Co., Ltd.), and lithium metal (φ15 mm) serving as a working electrode were disposed in this order in predetermined locations inside a TJ-AC coin cell manufactured by Nippon Tom Cell. Furthermore, an electrolyte solution made of a mixed solution of ethylene carbonate and methyl ethyl carbonate that contains 1 mol/L of $LiPF_6$ with vinylene carbonate added thereto was injected into the coin cell to produce a secondary battery.

(Examples 2 to 8)

Production was performed in the same manner as in Example 1 to obtain secondary batteries other than the negative electrodes 2 to 9 that each replaced the negative electrode 1.

[Evaluation of Battery Characteristics]

(Initial Charge and Discharge Characteristics)

In an atmosphere at 20°C, charge was performed with a current of 0.1 C determined on the basis of the theoretical capacity of the above-described negative electrode until the voltage reached 0.01 V under constant current and constant voltage conditions, and the charge was stopped when the current was decreased to 0.05 C. Subsequently, discharge was performed with a current of 0.1 C until the voltage applied to the metal Li reached 1.0 V to measure initial discharge capacity. Table 3 presents the results.

[Table 3]

|  | Negative Electrode | Initial charge and discharge efficiency (%) |
|---|---|---|
| Example 1 | Negative Electrode 1 | 88.6 |
| Example 2 | Negative Electrode 2 | 88.9 |
| Example 3 | Negative Electrode 3 | 88.3 |
| Example 4 | Negative Electrode 4 | 88.9 |
| Example 5 | Negative Electrode 5 | 88.5 |
| Example 6 | Negative Electrode 6 | 88.8 |
| Example 7 | Negative Electrode 7 | 88.4 |
| Example 8 | Negative Electrode 8 | 88.7 |
| Example 9 | Negative Electrode 9 | 88.8 |
| Example 10 | Negative Electrode 10 | 88.4 |
| Example 11 | Negative Electrode 11 | 88.5 |
| Comparative Example 1 | Negative Electrode 12 | 88.5 |

Table 3 confirms that the negative electrodes obtained in Examples 1 to 8 operate for secondary batteries.

Industrial Applicability

The negative electrode active material coating material and the negative electrode and the secondary battery using the negative electrode active material coating material according to the present invention have wide application to mobile devices and the like.

**Claims**

1. A negative electrode active material coating material comprising a negative electrode active material, a conductive agent, an aqueous binder, water, and a solvent, wherein a boiling point of the solvent is 200°C or more and 300°C or less, water solubility of the solvent at 25°C is 20 g/L or more, and a content of the solvent is 0.05% by mass or more and 5% by mass or less with respect to 100% by mass of the negative electrode active material coating material.

2. The negative electrode active material coating material according to Claim 1, wherein a total content of an aqueous binder is 0.05% by mass or more and 5% by mass or less with respect to 100% by mass of the negative electrode active material coating material.

3. A negative electrode comprising a current collector and a negative electrode active material mixture layer formed on the current collector, wherein the negative electrode active material mixture layer is formed by drying the negative electrode active material coating material according to Claim 1 or 2 and has a coating weight per unit area of 10 mg/cm$^2$ or more and 30 mg/cm$^2$ or less.

4. A secondary battery comprising a negative electrode, a positive electrode, a separator disposed between the negative electrode and the positive electrode, and an electrolyte solution, wherein the negative electrode is the negative electrode according to Claim 3.

## INTERNATIONAL SEARCH REPORT

| International application No. |
| --- |
| PCT/JP2018/036167 |

| A. CLASSIFICATION OF SUBJECT MATTER |
| --- |
| Int. Cl. H01M4/139(2010.01)i, H01M4/13(2010.01)i, H01M4/62(2006.01)i, H01M10/0566(2010.01)i |

According to International Patent Classification (IPC) or to both national classification and IPC

| B. FIELDS SEARCHED |
| --- |

Minimum documentation searched (classification system followed by classification symbols)
Int. Cl. H01M4/139, H01M4/13, H01M4/62, H01M10/0566

Documentation searched other than minimum documentation to the extent that such documents are included in the fields searched
Published examined utility model applications of Japan    1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2013-110018 A (NISSAN MOTOR CO., LTD.) 06 June 2013 (Family: none) | 1-4 |
| A | JP 2017-022019 A (TOYOTA MOTOR CORP.) 26 January 2017, & US 2017/0018777 A1 & DE 102016110481 A1 & CN 106356504 A & KR 10-2018-0029218 A | 1-4 |
| A | JP 2013-197078 A (NIPPON ZEON CO., LTD.) 30 September 2013 (Family: none) | 1-4 |
| A | JP 2017-071524 A (CHUO DENKI KOGYO CO., LTD.) 13 April 2017 (Family: none) | 1-4 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23.10.2018 | 06.11.2018 |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**

International application No.

PCT/JP2018/036167

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-033364 A (THE FURUKAWA BATTERY CO., LTD.) 16 February 2012 (Family: none) | 1-4 |

Form PCT/ISA/210 (continuation of second sheet) (January 2015)

**REFERENCES CITED IN THE DESCRIPTION**

**Patent documents cited in the description**

- JP 2016189352 A